# EUROPEAN PATENT APPLICATION

(11) **EP 1 940 056 A2**
(43) Date of publication of application: **02.07.2008**
(21) Application number: 07115622.8
(22) Date of filing: 04.09.2007
(51) Int. Cl.: H04H 60/65, H04H 40/18

(54) **Broadcast receiving apparatus and method thereof**

(30) Priority: 27.12.2006 KR 20060135550
(71) Applicant: Samsung Electronics Co., Ltd., Suwon-si Gyeonggi-do 443-742 (KR)
(72) Inventor: Shin, Seung-yeob, Gyeonggi-do (KR); Cho, Seung-kee 201-1603, Hyangchon Hyundai 4th Apartment,, Gyeonggi-do (KR); Kim, Kwang-won, Suwon-si, Gyeonggi-do (KR); Choi, Jae-ho, Seoul (KR)
(74) Representative: D'Halleweyn, Nele Veerle Trees Gertrudis

(57) **Abstract**

A broadcast receiving apparatus and a method for providing a channel search screen are provided, the apparatus including a broadcast receiving unit which tunes broadcast channels each for a time period, a storage media which classifiably stores, in each broadcast channel category, an amount of still images of previous broadcasts from the broadcast channels tuned by the broadcast receiving unit; and a combining unit which generates one broadcast screen by combining a first image from either a broadcast channel currently tuned by a user among the still images stored in the storage media or from a broadcast channel selected by the user, and a second image displaying a series of the still images of at least one broadcast channel among the still images stored in the storage media. Information about other channels such as Electronic Program Guide is improved such that still images of other channels are provided as animation.

## Description

### BACKGROUND OF THE INVENTION

### Field of the Invention:

Apparatuses and methods consistent with the present invention relate to a broadcast receiving apparatus and a broadcast receiving method, and more particularly, to a broadcast receiving apparatus for providing a channel search screen and a method thereof.

### Description of the Related Art:

A broadcast receiving apparatus such as a television (TV) displays a plurality of broadcasts on one screen at the same time such that user may watch a plurality of broadcasts.

This function is known as a Picture In Picture (PIP) function. A main image and sub image are displayed on the TV at the same time by using the PIP function.

A TV has at least two tuners to execute PIP function. One tunes to a broadcast channel providing a broadcast to be displayed on a main screen, and another tunes to another broadcast channel providing a broadcast to be displayed on the sub screen.

A TV has to be provided with more than three tuners to display more than three types of broadcasts on one screen, because the number of broadcasts displayed on the screen is equal to the number of tuners provided.

The number of tunable broadcast channels, tunable by the TV, has increased recently because of cable broadcast systems, satellite broadcast systems, and digital broadcast systems. Users want to display more broadcasts on one screen at the same time, so the number of tuners in the TV has to be increased to satisfy it.

Meanwhile, the digital broadcast or the satellite broadcast attempts to provide convenient channel tuning by using Electronic Program Guide (EPG). However, it is difficult for a user to recognize the information which is provided on the text basis.

### SUMMARY OF THE INVENTION

According to an aspect of the present invention, there is provided a broadcast receiving apparatus and a method thereof. The broadcast receiving apparatus provides a broadcast screen displaying a series of still images of a previous broadcast of broadcast channels currently not tuned, to display a plurality of broadcast images on one screen without requiring additional tuners for tuning to a channel.

In order to achieve another aspect, while a series of the still images of previous broadcasts of broadcast channels currently not tuned are displayed to display a plurality of broadcast images on one screen without requiring additional tuners, a broadcast receiving apparatus displaying a broadcast screen currently viewed by a user on one screen and a method are provided.

A broadcast receiving apparatus, according to an exemplary embodiment of the present invention, comprises a first broadcast receiving unit which tunes to tunable broadcast channels each for a predetermined time period; a storage media which classifiably stores, in each broadcast channel category, a predetermined amount of still images provided from the previous broadcasts which are previously tuned by the first broadcast receiving unit; and a combining unit which generates one broadcast screen by combining a first screen sequentially displaying still images of a broadcast channel currently tuned by a user among the still images stored in the storage media, or displaying a broadcast currently provided from the broadcast channel selected by a user, and a second screen sequentially displaying the still images of at least one broadcast channel among the still images stored in the storage media.

The still images may be acquired from an intra (I) frame of the previous broadcasts.

The first broadcast receiving unit tunes to tunable broadcast channels, each for the predetermined period in a circular manner, and if tuning to broadcast channels is executed circularly, the still images of previous broadcast provided from broadcast channel currently tuned by the first broadcast receiving unit are removed, and the still images of broadcast currently provided from the broadcast channel currently tuned by the first broadcast receiving unit are stored.

The combining unit combines such that a size of the first screen is larger than that of the second screen.

The broadcast channel corresponding to the still images displayed on the second screen may be a broadcast channel selected by a user.

The number of still images displayed on the first screen or on the second screen sequentially may be determined by a user.

The broadcast receiving apparatus further may comprise a display which displays one broadcast combined by the combining unit.

Also, the broadcast receiving apparatus displays information on the still images displayed on the first screen or the second screen.

The information comprises at least one among a broadcasting station, a broadcast program title, a duration of broadcast, and a time when the broadcast programs corresponding to still images are broadcast.

The second screen may comprise an image to select broadcast channels other than the currently displayed broadcast channel on a left or right side of the second screen.

The broadcast receiving apparatus further comprises a second broadcast receiving unit which tunes to a broadcast channel selected by a user, the first screen displays the broadcast currently provided from a broadcast channel tuned by the second broadcast receiving unit, and the first broadcast receiving unit tunes to the broadcast channel corresponding to the still images displayed on the second screen.

The broadcast receiving apparatus further comprises a second broadcast receiving unit which tunes to a broadcast channel corresponding to still images displayed on the first screen, the first screen displays sequentially still images of a broadcast channel tuned by the second broadcast receiving unit, and the first broadcast receiving unit tunes to a broadcast channel corresponding to still images displayed on the second screen.

A method for receiving a broadcast comprises a storing classifiably, in each broadcast channel category, a predetermined amount of still images of previous broadcasts provided from tunable broadcast channels; and a displaying sequentially still images of a broadcast channel currently selected by a user, or generating one broadcast screen by combining a first screen displaying broadcast currently provided from the broadcast channel currently selected by a user and a second screen displaying the still images of at least one broadcast channel among the still images stored.

The still images may be acquired from an intra (I) frame of the previous broadcasts.

The storing operation further comprises tuning to the tunable broadcast channels each for the predetermined time period in a circular manner; removing still images of the previous broadcast previously provided from currently tuned broadcast channel, if tuning tunable broadcast channels is executed circularly; storing the still images of broadcast currently provided from the currently tuned broadcast channel.

A size of the first screen is larger than that of the second screen.

The broadcast channel corresponding to the still images displayed on the second screen is the broadcast channel selected by a user.

The number of the series of still images displayed on the first screen or on the second screen may be determined by a user.

The method for receiving a broadcast further comprises displaying one broadcast combined.

The method for receiving a broadcast further comprises displaying information on the still images displayed on the first screen or on the second screen.

The information comprises at least one among a broadcasting station, a broadcast program title, a duration of broadcast, and a time when broadcast programs corresponding to still images are broadcast.

The second screen comprises the image to select broadcast channels other than the currently displayed broadcast channel on left or right side of the second screen.

### BRIEF DESCRIPTION OF THE DRAWINGS

These and/or other aspects of the invention will become apparent and more readily appreciated from the following description of exemplary embodiments, taken in conjunction with the accompanying drawing figures of which:

FIG. 1 is a block diagram of a broadcast receiving apparatus according to an exemplary embodiment of the present invention.

FIG. 2 is a flow chart illustrating a method of receiving broadcast according to an exemplary embodiment of the present invention.

FIGS. 3 and 4 are drawings illustrating the method of receiving broadcast of FIG. 2.

FIG. 5 is a block diagram of a broadcast receiving apparatus according to another exemplary embodiment of the present invention.

FIG. 6 is a flow chart illustrating a method of receiving broadcast according to another exemplary embodiment of the present invention.

FIG. 7 is a block diagram of a broadcast receiving apparatus according to another exemplary embodiment of the present invention.

FIG. 8 is a flow chart illustrating a method of receiving broadcast according to another exemplary embodiment of the present invention.

### DETAILED DESCRIPTION OF EXEMPLARY EMBODIMENTS

Certain exemplary embodiments of the present invention will now be described in greater detail with reference to the accompanying drawings.

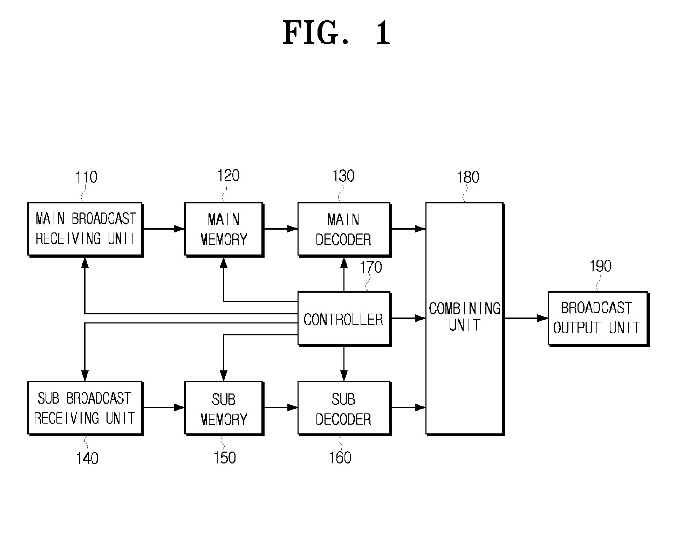

FIG. 1 is a block diagram of a broadcast receiving apparatus according to an exemplary embodiment of the present invention. The broadcast receiving apparatus according to the exemplary embodiment may provide one screen having at least one image displaying sequentially still images of broadcasts provided from a plurality of broadcast channels.

The screen provided by the broadcast receiving apparatus may include the broadcast provided from the broadcast channel tuned to by a user, and a series of still images of the broadcasts previously provided from the non-tuned broadcast channels.

Referring to FIG. 1, the broadcast receiving apparatus according to an exemplary embodiment of the present invention may include a main broadcast receiving unit 110, a main memory 120, a main decoder 130, a sub broadcast receiving unit 140, a sub memory 150, a sub decoder 160, a controller 170, a combining unit 180, and a broadcast output unit 190.

The main broadcast receiving unit 110 tunes to a broadcast channel selected by a user and receives the broadcast provided from the tuned broadcast channel.

The main memory 120 stores temporarily the broadcast received from the broadcast receiving unit 110. The main memory 120 can store predetermined amount of broadcast for example about six hours, in a first in first out (FIFO) order. The "time-shifting" refers to playing back a broadcast which has been previously displayed on the screen.

The main decoder 130 decodes a broadcast being outputted from the main memory 120, and transmits the outputted broadcast to the combining unit 180.

The sub broadcast receiving unit 140 is similar to the main broadcast receiving unit 110 in that the main broadcast receiving unit 140 tunes to a broadcast channel, and receives the broadcast provided from the tuned broadcast channel. However, the sub broadcast receiving unit 140 has difference from the main broadcast receiving unit 110 in that the sub broadcast receiving unit 140 samples the still image by tuning to the broadcast channels for a time period such as ten seconds.

For example, if the broadcast channels consist of channels from 1 to 100-21, the sub broadcast receiving unit 140 tunes to broadcast channel "1" for ten seconds and samples the still image, tunes to the broadcast channel "1-1" for ten seconds and samples the still image, ..., tunes to the broadcast channel "100-1" for ten seconds and samples the still image, and tunes to the broadcast channel "100-2" for ten seconds and samples the still image. Herein, the still image may be generated by converting the image after capturing intra (I) frame constituting the broadcast. The generated still image may be stored in the sub memory 150.

The sub broadcast receiving unit 140 tunes to the broadcast channels in a circular manner. That is, the sub broadcast receiving unit 140 tunes to the tunable broadcast channels in a circular manner. According to the above example, the sub broadcast receiving unit 140 retunes to the broadcast channel from "1 ", after having tuned to the broadcast channel "100-2".

The sub memory 150 classifiably stores the still images of the broadcasts lasting for a specific time period provided from the broadcast channels tuned by the sub broadcast receiving unit 140. The still images of broadcasts previously provided from the tunable broadcast channels are stored in the sub memory 150 respectively.

In the above example, the still images of the ten-second broadcast provided from the broadcast channel "1", the still images of the ten-second broadcast provided from the broadcast channel "I-1", ... , the still images of the ten-second broadcast provided from the broadcast channel "100-1 ", and the still images of the ten-second broadcast provided from the broadcast channel "100-2", are classifiably stored in the sub memory 150.

If a new broadcast channel is tuned, the still images of new broadcasts are stored, by removing the still images of the previous broadcasts stored in the sub memory 150. In the above example, if the sub broadcast receiving unit 140 retunes to the broadcast channel "1" after having tuned to the broadcast channel "100-2", the still images of the previous ten-second broadcast previously provided from the broadcast channel "1" stored in the sub memory 150 are replaced by the still images of the ten-second broadcast currently provided from the broadcast channel "1".

The broadcast channel tuned by the sub broadcast receiving unit 140 may consist of broadcast channels selected by a user. If a user wants to display only 6-1, 7-1, 9-1, and 11-1 as his preference broadcast channels, the sub broadcast receiving unit 140 may exclusively tune to the channels selected by a user, instead of tuning to all of the tunable broadcast channels. In this case, the latest still images may be provided to the user.

The sub decoder 160 decodes a part of the previous broadcasts classifiably stored in the sub memory 150 and outputs the decoded broadcasts to the combining unit 180. If decoding the still images stored in the sub memory 150 is unnecessary, the sub decoder 160 may be omitted.

The combining unit 180 generates one broadcast screen by combining the broadcast outputted from the main decoder 130 and the still images of the broadcasts outputted from the sub decoder 160. The broadcast outputted from the main decoder 130 is displayed on a main screen, and the still images of the previous broadcasts outputted from the sub decoder are displayed on a sub screen on one broadcast screen generated by the combining unit 180. A size of the main screen may be larger than a size of the sub screen.

The still images of previous ten-second broadcasts are stored in the sub memory 150, whereby the still images of the previous broadcasts may be displayed in sequence, on the respective sub screens in an animation. For example, the still images consisting of I frames included in the 20-second broadcast may be displayed in an animation. If decoding the previous broadcasts is terminated, the sub decoder 160 may be embodied to repeat the decoding to display recursively the still images of the previous broadcasts on the respective sub screens.

The broadcast output unit 190 may display one broadcast screen outputted from the combining unit 180 on a display such as Liquid Crystal Display (LCD), and Plasma Display Panel (PDP).

The controller 170 controls the overall operation of the broadcast receiving apparatus. That is, the main broadcast receiving unit 110 and the sub broadcast receiving unit 140 receive the broadcast, the main memory 120 and the sub memory 150 store and output the still images, and the combining unit 180 combines the broadcasts, under the control of the controller 170.

As described above, because two broadcast receiving units are provided, the broadcast currently selected by a user may be provided along with the channel selection part which provides the still images in an animation.

According to another exemplary embodiment of the present invention, only one broadcast receiving unit may be provided, and the channel tuning screen may provide the still image in an animation.

Referring to FIG. 1, the still images of the previous broadcasts of the broadcast channels may be displayed in an animation as a user interface for channel tuning, by using the sub broadcast receiving unit 140, the sub memory 150, the combining unit 180, and the broadcast output unit 190. If one broadcast receiving unit is provided, the broadcast receiving unit 140 may be controlled to tune in order the other broadcast channels for searching the channel instead of providing the current broadcast of the channel selected by a user. The channel selection part may be displayed along with the still image of the broadcast channel selected by a user.

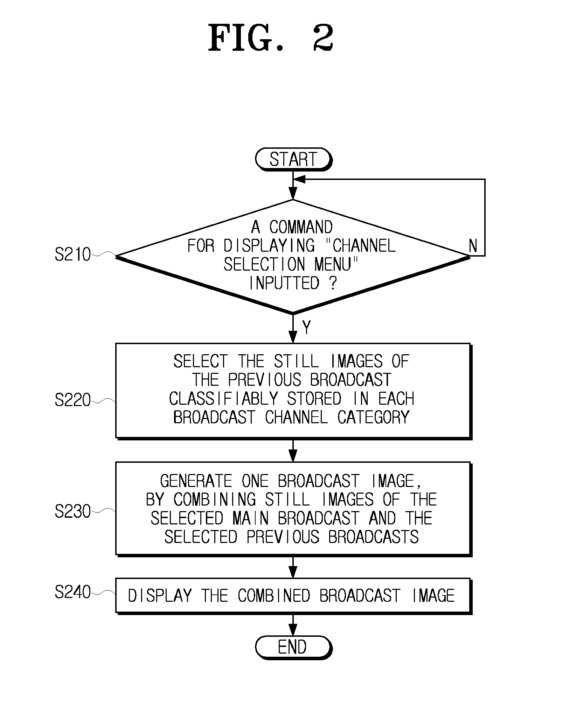

The controller 170 controls the broadcast receiving apparatus to provide the broadcast of the broadcast channel currently tuned by the main broadcast receiving unit 110, and the previous broadcasts of the broadcast channels currently not tuned by the main broadcast receiving unit 110 into one broadcast, and this will be explained below with reference to an exemplary embodiment of the present invention and FIG. 2. FIG. 2 is a flowchart to explain a method for receiving a broadcast according to an exemplary embodiment of the present invention.

Referring to FIG. 2, the controller 170 determines whether a command for displaying "channel selection part" is inputted by a user or not (S210). The "channel selection part" refers to a broadcast screen consisting of the broadcast of the broadcast channel currently tuned by the main broadcast receiving unit 110 and still images of the previous broadcasts of the other broadcast channels currently not tuned by the main broadcast receiving unit 110.

If the command for displaying the channel selection part is inputted at S210 (S210-Y), the controller 170 controls such that the still images of the previous broadcast classifiably stored in the sub memory 150 are selected (S220).

To execute operation S220, the controller 170 selects the previous broadcasts to constitute the channel selection part among the previous broadcasts classifiably stored in the sub memory 150. The controller 170 outputs the still images of the selected previous broadcasts from the sub memory 150, and transmits the outputted still images to the sub decoder 160.

The previous broadcasts selected by the controller 170 may be determined by a user using an operating key or a menu image, or the like. Alternatively, the controller 170 may select the previous broadcasts of four most frequently selected broadcast channels. A user may select broadcast cannels not displayed on the screen, in which case the still images constituting the previous broadcasts of the selected broadcast channels are displayed.

The combining unit 180 generates one broadcast image, by combining the main broadcast outputted from the main decoder 130 and the still images of the previous broadcasts outputted from the sub decoder 160 (S230).

If the broadcast receiving apparatus has only one broadcast receiving unit 140, the still images of the broadcast channel currently selected by the user, among the still images of the previous broadcasts, may be sequentially displayed, instead of displaying the main broadcast.

The combining unit 180 may combine the broadcasts to display the main broadcast outputted from the main decoder broadcast as the main image, and to sequentially display the still images of the previous broadcast outputted from the sub decoder 160 as the sub images.

The broadcast output unit 190 may display the combined broadcast image outputted from the combining unit 180 on the display apparatus (S240).

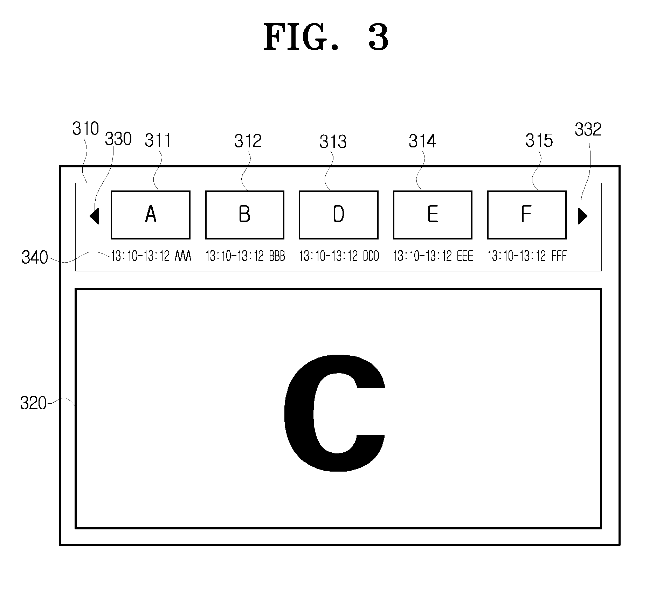

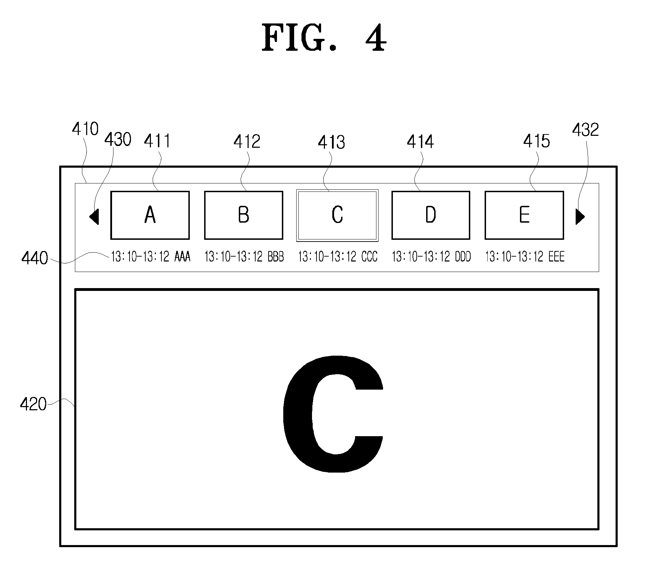

The method for receiving a broadcast of FIG. 2 will be explained with reference to FIGS. 3 and 4. FIG. 3 shows a screen comprising a main screen 320 in which a broadcast of a broadcast channel selected by a user is provided, and FIG. 4 shows a screen comprising a main screen 420 which subsequently displays still images of a broadcast channel selected by a user using a single broadcast receiving unit.

In FIG. 3, previous broadcasts A, B, D, E, and F of the respective broadcast channels sequentially stored in the sub memory 150 are displayed.

Referring to FIG. 3, the combining unit 180 combines a main broadcast C decoded and outputted from the main decoder 130 as a main screen 320 and the previous broadcasts A, B, D, E, and F decoded and outputted from the sub decoder 160 as sub screens 311, 312, 313, 314, and 315. This operation corresponds to operation S230, and generates a single broadcast screen.

In FIG. 3, the broadcast channel displayed on the main screen 320 is not displayed on the sub screen of the channel tuning screen 310, but the still images of the broadcast channel displayed on the main screen 320 may be displayed on the channel tuning screen 310.

Additionally, referring to FIG. 3, information 340 on the still images of the previous broadcasts of the respective broadcast channels may be displayed. The information may comprise information relating to the broadcasting station names AAA, BBB, DDD, EEE, and FFF and the time for extracting still image for example 13:10 - 13:12. The broadcast program title and the duration of the broadcast may be also displayed. Various channel tuning information comprising an animation A, B, D, E, and F using still images from broadcasts together with the broadcasting program titles may be displayed to the user.

Following channel searching screens 330, and 332 may be displayed. Referring to FIG. 3, the following channel searching screens 330, and 332 may be displayed on the left and right of the channel tuning screen 310. If the user desires to watch channels which are not displayed on the screen, he/she may select these. If the channel searching screen 330 on the left is selected, the channel information 315 at the rightmost portion of the channel tuning screen 310 may disappear, and the channel information displayed on the left of the screen may move to the right. The channel information newly added at the leftmost portion of the screen is then displayed. If the channel searching display 332 on the right of the screen is selected, the above operations may be inversely performed.

Referring to FIG. 4, the previous broadcasts A, B, C, D, and E of the respective broadcast channels sequentially stored in the sub memory 150 are displayed.

As shown in FIG. 4, the combining unit 180 combines the main broadcast C decoded and outputted from the decoder 160 on the main screen 420 and the previous broadcasts A, B, C, D, and E decoded and outputted from the sub decoder 160 on the sub screens 411, 412, 413, 414, and 415. Therefore, the combining unit 180 generates one broadcast screen.

In FIG. 4, still images from the broadcast channel displayed on the main screen 420 are also displayed on a channel tuning screen 410. However, it is possible not to display the still images from the broadcast channel displayed on the main screen 420 on the channel tuning screen 410. The current broadcast of the current broadcast channel selected by a user is displayed on the main screen 320 in FIG. 3, but the animation sequentially displaying the still images of the broadcast channel selected by a user among the still images of the previous broadcasts stored in the sub memory 150 is displayed on the main screen 420 in FIG. 4.

The broadcast channel of the still images displayed on the sub screen 413 may be the same as the broadcast channel of the still images displayed on the main screen 420. Accordingly, the animation of the still images displayed on the sub screen 413 may be the same as the animation of the still images displayed on the main screen 420. The sub screen 413 corresponding to the broadcast channel displayed on the main screen 420 may be displayed differently to the other sub screens 411, 412, 414, and 415. For example, an outline of the sub screen 413 may be highlighted, or a different color from the other sub screens 411, 412, 414, and 415 may be used.

The sub images 411 through 415, and following channel tuning screens 430 and 432 are similar to the sub images 311 through 315 and following channel tuning screens 330 and 332 as described.

As described above, the main screen 420 shows a screen currently selected by the user from among the sub screens 411 to 415. Accordingly, in a device including a small display screen, for example a digital multimedia broadcasting (DMB) apparatus, a larger screen is provided for a broadcast provided on a broadcasting channel currently selected by the user, and thus the user can easily check the broadcast provided on the broadcasting channel currently selected by the user.

The operation for providing the channel tuning screen comprising the broadcast provided on the broadcast channel selected by the user and the broadcasts previously provided on other broadcast channels not currently tuned was explained in detail with reference to the exemplary embodiments of the present invention.

In the exemplary embodiments of the present invention, five sub screens 311 to 314 or 411 to 415 for displaying the still images of the previous broadcasts stored in the sub memory 150 are provided. However, this is only an exemplary embodiment for convenience of description, and the number of the sub screens is not necessarily limited to five. For example, fewer than five sub screens may be used, and more than five sub screens may also be used.

Additionally, the broadcast receiving apparatus according to the exemplary embodiment of the present invention comprises separately a memory which stores a broadcast tuned by the main broadcast receiving unit 110, and a memory which stores the broadcasts tuned by the sub broadcast receiving unit 140. In other words, the broadcast receiving apparatus comprises the main memory 120 and sub memory 150. However, the broadcast receiving apparatus may combine the main memory 120 and sub memory 150 in as single memory, or the sub memory 150 may be divided into several blocks.

In order to implement an exemplary embodiment of the present invention, two or more sub broadcast receiving units make it possible to reduce the cycle in which the broadcast channels are switched. For example, if two sub broadcast receiving units are present, one receiving unit may tune to from broadcast channels "1" to "50-2" circularly, and another receiving unit may tune to broadcast channels "51" to "100-2" circularly. The sub memory 150 may store the still images of the broadcasts tuned by the two sub broadcast receiving units.

In addition, in the exemplary embodiment of the present invention, the sub broadcast receiving unit 140 tunes to each broadcast channel for ten seconds, but the present invention is not limited thereto. The time required to tune to the channels may be determined by a user, or automatically set by the controller 170 based on the number of tunable broadcast channels.

If the time is automatically set by the controller 170, the time may be inversely proportional to the number of tunable broadcast channels. For example, if ten broadcast channels are tunable, the time may be set to be about ten seconds, and if twenty broadcast channels are tunable, the time may be set to be about 5 seconds.

Additionally, the number of still images extracted from the channels on the channel tuning screens 310 and 410 may be set by a user or by a manufacturer of a broadcast receiving apparatus. For example, a single still image may be extracted for ten seconds, or all I frames received for ten seconds may be converted into still images and stored.

As the broadcast receiving apparatus shown in FIG. 1 is only an exemplary embodiment, not all blocks shown in FIG. 1 need to be included in the broadcast receiving apparatus according to the exemplary embodiment of the present invention, and unnecessary blocks can be omitted. For example, when the broadcast receiving apparatus is a set-top box, the broadcast output unit 190 may be omitted.

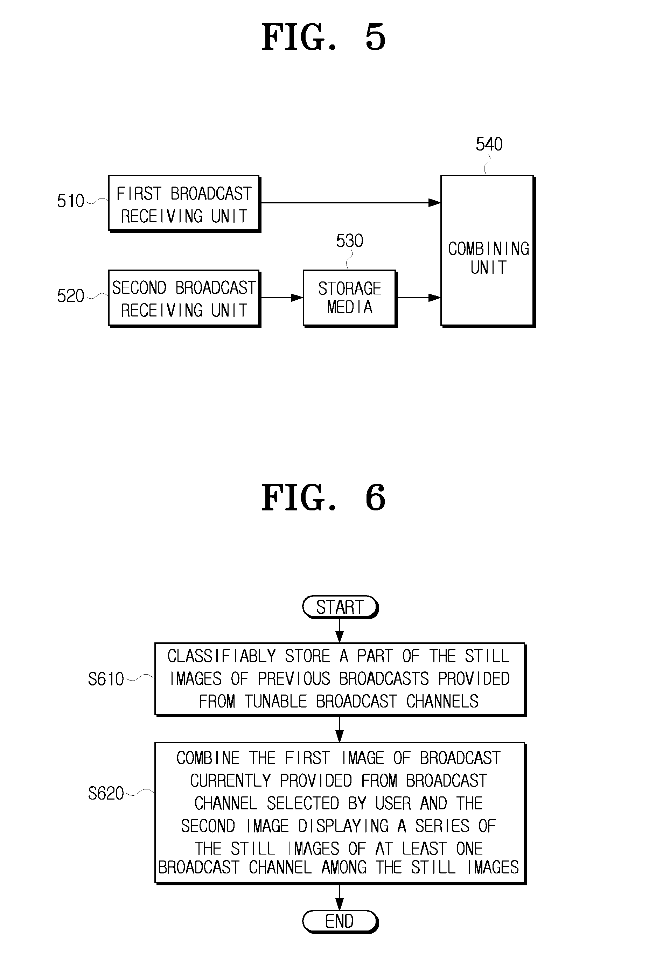

Another exemplary embodiment of the present invention will be explained in detail with reference to FIGS. 5 and 6.

Referring to FIG. 5, a broadcast receiving apparatus according to another exemplary embodiment of the present invention comprises a first broadcast receiving unit 510, a second broadcast receiving unit 520, a storage media 530, and a combining unit 540.

The first broadcast receiving unit 510 tunes to a broadcast channel selected by a user, and the second broadcast receiving unit 520 tunes to selectable broadcast channels each for the predetermined time period. The storage media 530 stores, in each broadcast channel category, a predetermined amount of still images provided from the previous broadcasts which were tuned by the second broadcast receiving unit 520. The combining unit 540 generates one broadcast screen by combining the first image displaying broadcast provided from a broadcast channel currently tuned by the first broadcast receiving unit 510 and the second image displaying a series of the still images of at least one broadcast channel among the still images stored in the storage media 530.

According to a method for receiving the broadcast illustrated in FIG. 6, the storage media 530 classifiably stores a part of the still images constituting the previous broadcasts provided from the tunable broadcast channels by the second broadcast receiving unit 520, in each broadcast channel category (S610). The combining unit 540 combines the first image and the second image and generates one broadcast image (S620). The first image is the broadcast currently provided from the broadcast channel tuned by the first broadcast receiving unit 510 by being selected by a user, and the second image displays a series of the still images of at least one broadcast channel among the still images of the previous broadcasts.

Referring to FIGS. 5 and 6, the broadcast channel currently selected by a user may be tuned by using the second broadcast receiving unit 520 instead of using the first broadcast receiving unit 520. Accordingly, the still images of the previous broadcasts are stored in the storage media by using the only one broadcast receiving unit 520, and the previously stored still image may be displayed sequentially, while the broadcast of the current broadcast channel is being provided.

Accordingly, a broadcast receiving apparatus and a method to provide a broadcast provided from a broadcast channel tuned by a user, and a channel selection part consisting still images of broadcasts previously provided from other non-tuned broadcast channels, are provided.

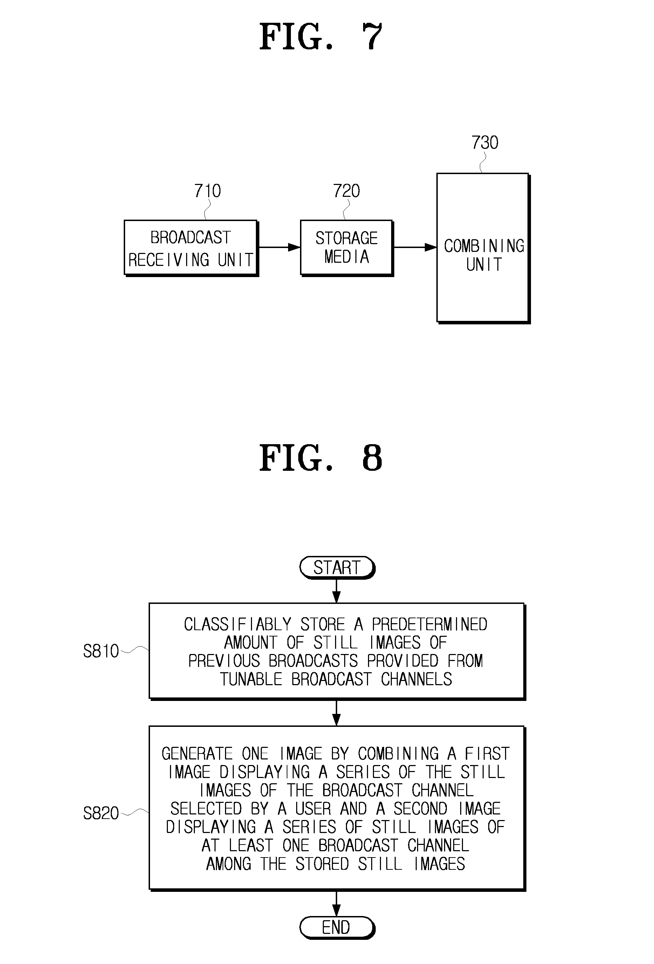

Hereinbelow, another exemplary embodiment of the present invention will be explained with reference to FIGS. 7 and 8.

Referring to FIG. 7, a broadcast receiving apparatus according to another embodiment of the present invention may include a broadcast receiving unit 710, a storage media 720, and a combining unit 730.

The broadcast receiving unit 710 tunes to tunable broadcast channels. The storage media 720 stores, in each broadcast channel category, a predetermined amount of still images provided from the previous broadcasts which were tuned by the broadcast receiving unit 710. The combining unit 730 generates one image by combining a first image displaying a series of still images of the broadcast channel currently selected by a user among still images stored in the storage media 720, and a second image displaying a series of still images of at least one broadcast channel among still images stored in the storage media 720.

According to a method for receiving a broadcast exemplified in FIG. 8, the storage media 720 stores, in each broadcast channel category, a predetermined amount of still images of previous broadcasts provided from tunable broadcast channels by the broadcast receiving unit 710 (S810). The combining unit 730 generates one image by combining a first image displaying a series of the still images of the broadcast channel currently selected by a user among still images of the previous broadcasts previously stored in the storage media 720, and a second image displaying a series of still images of at least one broadcast channel among still images of the previous broadcasts previously stored in the storage media 720 (S820).

Referring to FIGS. 7 and 8, the exemplary embodiment explains displaying a series of the still images of the broadcast channel currently selected by a user among still images of the previous broadcasts by using one broadcast receiving unit, but a separate broadcast receiving unit from the broadcast receiving unit 710 may be used. That is, the broadcast channel of the still images displayed on the second screen may be tuned by using the broadcast receiving unit 710, and broadcast channel of the still images displayed on the first screen may be tuned by using a separate broadcast receiving unit. As a result, the still images displayed on the first screen and the second screen may be replaced by a still image of a more recent broadcast.

Accordingly, a broadcast receiving apparatus and method providing the channel tuning screen consisting a screen displaying a series of the still images of the currently selected broadcast by a user, and a screen displaying a series of the still images of broadcasts provided from the currently unselected broadcast channel, are provided.

According to an exemplary embodiment of the present invention as described above, still images of broadcasts provided from a broadcast channel tuned by a user and of broadcasts previously provided from broadcast channels not tuned by the user may be provided into one screen. Accordingly, broadcasts of other broadcast channels currently not tuned are provided by displaying a plurality of broadcast images on one screen, without requiring additional tuners such that it is easy for a user to tune to other channels.

That is, text-basis information about other channels such as conventional Electronic Program Guide (EPG) is improved such that still images of other channels are provided in an animation. As a result, a user obtains information about other channels with improved convenience.

According to the exemplary embodiments of the present invention as described above, still images of other channels are displayed in an animation, by using only one tuner. Also, broadcast program information of other channels and generating time of still images is provided such that a user is provided with both an image and text information.

According to exemplary embodiments of the present invention, an animation of still images of broadcast channel selected by a user are provided in an animation such that a user can obtain broadcast information of preference broadcast channel with convenience.

The foregoing embodiments are merely exemplary and should not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A broadcast receiving apparatus comprising:
a first broadcast receiving unit which tunes a plurality of broadcast channels, each for a predetermined time period;
a storage media which classifiably stores, in each broadcast channel category, a predetermined amount of still images provided from previous broadcasts previously tuned by the first broadcast receiving unit; and
a combining unit which generates one broadcast screen by combining a first screen sequentially displaying the stored still images of a tuned broadcast channel, which is currently tuned to by a user using the first broadcast receiving unit, from the stored still images stored in the storage media, or displaying a broadcast signal of a broadcast channel selected by the user, and a second screen displaying sequentially the stored still images of at least one broadcast channel from the stored still images stored in the storage media.

2. The broadcast receiving apparatus of claim 1, wherein the stored still images are acquired from respective intra (I) frames of the previous broadcasts.

3. The broadcast receiving apparatus of claim 1, wherein the first broadcast receiving unit tunes the plurality of broadcast channels, each for the predetermined time period, in a circular manner, and if the tuning to the plurality of broadcast channels is executed circularly, the stored still images of a previous broadcast provided from the tuned broadcast channel currently tuned by the first broadcast receiving unit are removed, and the new still images from the tuned broadcast channel currently tuned by the first broadcast receiving unit are stored.

4. The broadcast receiving apparatus of claim 1, wherein the combining unit combines the first and second screens such that a size of the first screen is larger than a size of the second screen.

5. The broadcast receiving apparatus of claim 1, wherein the broadcast channel corresponding to the stored still images displayed on the second screen may be the first selected broadcast channel selected by the user.

6. The broadcast receiving apparatus of claim 1, wherein a number of the stored still images displayed on the first screen or on the second screen may be determined by the user.

7. The broadcast receiving apparatus of claim 1, further comprising a display which displays the one broadcast screen combined by the combining unit.

8. The broadcast receiving apparatus of claim 1, wherein the apparatus displays information on the stored still images displayed on one of the first screen and the second screen.

9. The broadcast receiving apparatus of claim 8, wherein the information comprises at least one of a broadcasting station, a broadcast program title, a duration of a broadcast, and a time when the broadcast programs corresponding to the stored still images are broadcast.

10. The broadcast receiving apparatus of claim 1, wherein the second screen comprises an image to select other broadcast channels of the plurality of broadcast channels, on a left or a right side of the second screen, and
wherein the other broadcast channels are other than the broadcast channels displayed in the first and second screens.

11. The broadcast receiving apparatus of claim 1, further comprising a second broadcast receiving unit which tunes to a second selected broadcast channel selected by the user, and
wherein the first screen displays a tuned broadcast channel tuned by the second broadcast receiving unit, and the first broadcast receiving unit tunes to the at least one broadcast channel corresponding to the stored still images displayed on the second screen.

12. The broadcast receiving apparatus of claim 1, further comprising a second broadcast receiving unit which tunes to the tuned broadcast channel corresponding to the stored still images displayed on the first screen, and
wherein the first screen displays sequentially the stored still images of the tuned broadcast channel tuned by the second broadcast receiving unit, and the first broadcast receiving unit tunes to the broadcast channel corresponding to the stored still images displayed on the second screen.

13. A method for receiving a broadcast from a plurality of broadcast channels, the method comprising:
storing classifiably, according to a broadcast channel category, a predetermined amount of still images of previous broadcasts provided from the plurality of broadcast channels; and
performing one of displaying sequentially the stored still images of a broadcast channel currently selected by a user, and generating one broadcast screen comprising a first screen and a second screen, wherein the generating is performed by displaying the broadcast channel currently selected by the user and the second screen displaying sequentially the stored still images of at least one broadcast channel.

14. The method for receiving a broadcast of claim 13, wherein the stored still images are acquired from respective intra (I) frames of the previous broadcasts.

15. The method for receiving a broadcast of claim 13, wherein the storing operation further comprising:
tuning of the plurality of broadcast channels, each for a predetermined time period, in a circular manner;
removing the stored still images of the previous broadcast previously provided from a currently tuned broadcast channel, if the tuning to the plurality of broadcast channels is executed circularly;
storing new still images from the currently tuned broadcast channel.

16. The method for receiving a broadcast of claim 13, wherein a size of the first screen is larger than a size of the second screen.

17. The method for receiving a broadcast of claim 13, wherein the broadcast channel corresponding to the stored still images displayed on the second screen is the broadcast channel selected by the user.

18. The method for receiving a broadcast of claim 13, wherein a number of the stored still images displayed on one of the first screen and the second screen is determined by the user.

19. The method for receiving a broadcast of claim 13, further comprising displaying the one broadcast screen.

20. The method for receiving a broadcast of claim 13, further comprising displaying information on the stored still images displayed on one of the first screen and the second screen.

21. The method for receiving a broadcast of claim 20, wherein the information comprises at least one among a broadcasting station, a broadcast program title, a duration of broadcast, and a time when broadcast programs corresponding to the stored still images are broadcast.

22. The method for receiving a broadcast of claim 13, wherein the second screen comprises an image to select other broadcast channels from the plurality of broadcast channels, on a left or a right side of the second screen, and
wherein the other broadcast channels are other than the broadcast channels displayed in the first and second screens.
